Europäisches Patentamt

European Patent Office

Office européen des brevets

(19)

(11) Veröffentlichungsnummer: **0 192 087**
A2

(12)
## EUROPÄISCHE PATENTANMELDUNG

(21) Anmeldenummer: 86101082.5

(22) Anmeldetag: 28.01.86

(51) Int. Cl.⁴: **A 61 C 19/00**

(30) Priorität: 14.02.85 DE 8504096 U

(43) Veröffentlichungstag der Anmeldung:
27.08.86 Patentblatt 86/35

(84) Benannte Vertragsstaaten:
AT BE CH DE FR GB IT LI LU NL SE

(71) Anmelder: **Degussa Aktiengesellschaft
Weissfrauenstrasse 9
D-6000 Frankfurt am Main 1(DE)**

(72) Erfinder: **Unterberger, Walter
Ginsterweg 8
D-8588 Weidenberg-Stockau(DE)**

(54) Vorrichtung zur Herstellung eines Riegels für einen Zahnersatz.

(57) Es wird eine Vorrichtung zur Herstellung eines Riegels für einen Zahnersatz beschrieben, der eine Bohrung für eine Achse aufweist. Dieser Riegel wird auf einer Einspanneinrichtung mittels eines Einspannstiftes befestigt. Die Bearbeitung des Riegels erfolgt mit einem Fräswerkzeug.

EP 0 192 087 A2

0192087

Degussa Aktiengesellschaft
Weissfrauenstraße 9, 6000 Frankfurt (Main)


Vorrichtung zur Herstellung eines Riegels
für einen Zahnersatz


Die Erfindung betrifft eine Vorrichtung zur Herstellung eines Riegels, der eine Bohrung aufweist, durch die sich eine Riegelachse hindurcherstreckt, mit welcher der Riegel in einem Zahnersatz verschwenkbar angeordnet ist und dessen umlaufende Mantelfläche mindestens einen zur Bohrung konzentrischen Radius aufweist.

Derartige Riegel dienen zum Arretieren eines Zahnersatzes in einer Lücke eines Gebisses. Dazu weisen derartige Riegel eine Riegelachse auf, die im Zahnersatz befestigt ist, und um die der Riegel verschwenkbar gelagert ist.

Je nach der Grösse des Zahnersatzes, d.h. je nach der Anzahl Zähne des Zahnersatzes kann ein derartiger Riegel zur Bohrung, durch welche sich die Riegelachse hindurcherstreckt, einen konzentrischen Radius oder drei bzw. fünf konzentrische Radien aufweisen.

0192087

Riegel mit nur einem Radius werden bei kleinvolumigem Zahnersatz angewandt. Diese kreisscheibenförmigen Riegel weisen in der umlaufenden Mantelfläche eine Ausnehmung auf, die an einen Ansatz formmässig angepasst ist, der von einem feststehenden Zahn, an welchem der Zahnersatz befestigt werden soll, wegsteht.

Riegel mit drei konzentrischen Radien werden vor allem bei aus mehreren Zähnen bestehendem Zahnersatz angewandt, weil dort das Platzangebot grösser ist.

Die bekannten Riegel werden beispielsweise aus einem Plättchen aus Gold oder aus einem Vorformling hergestellt, dessen Kontur an die Mantelfläche des fertigen Riegels näherungsweise angepasst ist..Ein Riegel-Rohling der zuletztgenannten Art wird in an sich bekannter Weise in einem Schleuder- oder Druckgussverfahren hergestellt.In einem ersten Arbeitsschritt wird der eine Radius bzw. werden drei oder fünf Radien mittels eines Reisswerkzeuges markiert. Anschliessend wird mit einem hängenden Bohrwerkzeug die Bohrung für die Riegelachse gebohrt und mit einem hängenden Fräswerkzeug die Mantelfläche des Riegels gefräst. Dieser Fräsvorgang muss sehr sorgfältig und präzise ausgeführt werden, um den mindestens einen Radius herzustellen. Je grösser die Anzahl der herzustellenden Radien ist, um so aufwendiger und zeitraubender ist die Bearbeitung der Mantelfläche eines derartigen Riegels.

Die Mantelfläche des Riegels muss deshalb konstante Radien aufweisen, weil der im Zahnersatz befindliche Riegelkasten um den in seiner arretierten Stellung befindlichen Riegel gegossen wird. Bei einem Riegel mit einem nicht konstanten Radius ergibt sich zwischen dem

0192087

Riegel und dem Riegelkasten ein Spalt. In einem solchen Spalt sammeln sich Speisereiste und Speichel, die sich zersetzen und eine unerwünschte Geruchsbildung ergeben.

Der vorliegenden Erfindung liegt die Aufgabe zugrunde, eine Vorrichtung der eingangs genannten Art zu schaffen, mit der es möglich ist, Riegel für einen Zahnersatz mit einer Mantelfläche sehr genau und zeitsparend herzustellen, die mindestens einen Radius aufweisen.

Diese Aufgabe wird durch einen Lagersockel gelöst, der an seiner Deckfläche eine Einspanneinrichtung mit einer Bohrung für einen der Riegelachse im Durchmesser entsprechenden Einspannstift aufweist, wobei die Einspanneinrichtung mit einer über die Deckfläche des Lagersockels überstehenden Auflagefläche zum Auflegen des Riegels versehen ist, der eine Bohrung aufweist, durch die sich der Einspannstift hindurcherstreckt.

Der Riegel-Rohling wird in einem ersten Arbeitsgang mit einer Bohrung versehen, durch welche sich die Riegelachse hindurcherstrecken soll. Der mit der Bohrung versehene Riegel-Rohling wird auf die Auflagefläche der Einspanneinrichtung aufgelegt und mit dem Einspannstift, der sich durch den Riegel-Rohling in die Einspanneinrichtung hineinerstreckt, auf der Einspanneinrichtung derart befestigt, dass er um den Einspannstift drehbar ist. Der um den Einspannstift drehbare Riegel-Rohling kann mittels eines hängenden Fräswerkzeuges, das in einem dem Radius der Mantelfläche des Riegels entsprechenden Abstand vom Einspannstift über der Deckfläche des Lagersockels angeordnet wird, sehr genau bearbeitet werden. Mit der erfindungsgemässen Vorrichtung ist es sehr zeitsparend möglich, die umlaufende Mantelfläche des Riegels mit einem Radius, oder mit drei bzw. fünf Radien auszubilden, die alle zum Einspannstift und damit zur Bohrung des Riegels konzentrisch sind.

Es hat sich als zweckmässig erwiesen, dass die Einspanneinrichtung aus zwei Teilen besteht und in einer Ausnehmung des Lagersockels auswechselbar einsteckbar ist, wobei das erste Spannteil die Bohrung zum Einstellen des Einspannstiftes aufweist und das zweite Spannteil mittels einer Feststelleinrichtung gegen das erste Einspannteil und gleichzeitig gegen den Einspannstift verstellbar ist.

Eine derartige Einspanneinrichtung ist einfach aufgebaut und weist den Vorteil auf, dass die einem bestimmten Durchmesser der Bohrung im Riegel entsprechende Einspanneinrichtung einfach in die Ausnehmung in der Deckfläche des Lagersockels eingesteckt werden kann.Auf diese Weise ist der Zeitaufwand für das Auswechseln einer Einspanneinrichtung sehr gering.

Das erste Spannteil der Einspanneinrichtung kann ein Zylinder mit einer zur Bohrung senkrechten Querausnehmung sein, die mindestens bis zur Bohrung reicht, und das zweite Spannteil ist in der Ausnehmung angeordnet und weist eine an die Mantelfläche des Zylinders des ersten Spannteils angepasste Rückenfläche auf,an der die Feststelleinrichtung anliegt.Das erste und das zweite Spannteil bilden eine Einheit,die einfach in der Ausnehmung des Lagersockels auswechselbar angeordnet werden kann.Dabei kann das erste Spannteil aus Metall und das zweite Spannteil aus Kunststoff bestehen.

Das erste Spannteil der Einspanneinrichtung kann von seiner Auflagefläche ausgehend eine Aussparung aufweisen. In dieser Aussparung kann das Fräswerkzeug in einem relativ kleinen Abstand vom Einspannstift,d.h. von der

- 5 -

Bohrung im Riegel, angeordnet werden. Dadurch kann ein Riegel mit einem vergleichsweise kleinen Radius hergestellt werden, ohne dass die Auflagefläche für den Riegel wesentlich reduziert wird.

Bei einer bevorzugten Weiterbildung der erfindungsgemässen Vorrichtung weist der Lagersockel an seiner Deckfläche eine Auflagereinrichtung auf, die eine Auflagerfläche besitzt, die mit der Auflagefläche der Einspanneinrichtung eine gemeinsame Ebene bildet. Diese Auflagereinrichtung kommt insbesondere bei Riegeln mit mehr als einem zur Bohrung konzentrischen Radius zur Anwendung. Mit der Auflagereinrichtung ergibt sich eine sehr gute Lagerung eines Riegels, der grössere radiale Abmessungen aufweist.

Dabei kann die Auflagereinrichtung einen mit der Auflagerfläche versehenen Lagerbock aufweisen, der in Bezug zur Einspanneinrichtung in radialer Richtung verstellbar ist. Der in radialer Richtung verstellbare Lagerbock weist die Vorteile auf, dass die Lagerung unterschiedlich geformter Riegel einfach möglich ist und dass durch die radiale Verstellbarkeit des Lagerbocks der freie Zugang des Fräswerkzeuges zu verschiedenen, an der Mantelfläche mit konzentrischen Radien auszubildenden Riegeln nicht behindert wird.

Der Lagerbock kann entlang einer Schraubspindel verstellbar sein. Mit einer derartigen Schraubspindel ist eine sehr genaue Verstellung des Lagerbockes möglich.

Es hat sich als vorteilhaft erwiesen, dass die Auflagerfläche der Auflagereinrichtung als Kreisringsegment ausgebildet ist. Dadurch ergibt sich eine vergleichsweise grosse Auflagerfläche insbesondere für einen drei zur Bohrung konzentrische Radien aufweisenden Riegel.

Bei einer weiteren Ausbildung der erfindungsgemässen Vorrichtung weist der Lagersockel an seiner Deckfläche ausser der Einspanneinrichtung für den Einspannstift und der Auflagereinrichtung noch eine Einspanneinrichtung zum Festspannen des mit der Bohrung zu versehenden Riegel-Rohlings auf. Durch die in die erfindungsgemässe Vorrichtung integrierte Einspanneinrichtung ist eine zusätzliche Einspanneinrichtung zum Festspannen des Riegel-Rohlings entbehrlich, so dass die Herstellung eines Riegels weiter vereinfacht wird.

Die Einspanneinrichtung kann einen starren Backen und einen mittels einer Verstelleinrichtung verstellbaren Backen aufweisen.

Es hat sich als vorteilhaft erwiesen, dass der starre und der verstellbare Backen mit abgewinkelten Backenflächen versehen sind. Mit derartigen Backen mit abgewinkelten Backenflächen kann nicht nur ein viereckiger Riegel-Rohling sehr sicher gehalten werden, sondern auch ein Riegel-Rohling, dessen Aussenkontur an die Mantelfläche des fertigen Riegels näherungsweise angepasst ist.

Bei einer Ausbildung der erfindungsgemässen Vorrichtung sind die Einspanneinrichtung für den Einspannstift, die Auflagereinrichtung und die Einspanneinrichtung für den Riegel-Rohling am Lagersockel gleichmässig verteilt angeordnet. Durch diese gleichmässige Anordnung ergibt sich eine einfache Handhabbarkeit der erfindungsgemässen Vorrichtung.

Der Lagersockel weist vorzugsweise eine Grundfläche auf, die grösser ist als seine Deckfläche. Durch eine derartige Ausbildung ergibt sich jederzeit eine sehr stabile Lage der erfindungsgemässen Vorrichtung in Bezug zu einem über der Vorrichtung hängend angeordneten Bohrwerkzeug zur Herstellung der Bohrung im Riegel, sowie eines über der Vorrichtung hängend angeordneten Fräswerkzeuges zum genauen Bearbeiten der Mantellinie des Riegels, die mindestens einen zur Bohrung konzentrischen Radius aufweist.

Damit der Lagersockel auf einer Unterlage infolge seines Eigengewichtes quasi unverrutschbar auch während der Bearbeitung der Mantelfläche des Riegels stehen bleibt, besteht der Lagersockel beispielsweise aus Metall und ist aus vollem Material hergestellt. Der Lagersockel kann auch aus einem magnetisierbaren Material bestehen. In diesem Fall kann die Unterlage, auf welcher die erfindungsgemässe Vorrichtung angeordnet wird, eine Magnetspule aufweisen.

Weitere Einzelheiten, Merkmale und Vorteile ergeben sich aus der nachfolgenden Beschreibung eines in der Zeichnung dargestellten Ausführungsbeispiels einer erfindungsgemässen Vorrichtung. Es zeigen:

Fig. 1 einen Schnitt entlang der Schnittlinie I-I aus Fig. 6,

Fig. 2 einen Schnitt entlang der Schnittlinie II-II aus Fig. 1,

Fig. 3 einen Schnitt entlang der Schnittlinie III-III aus Fig. 1,

Fig. 4a und 4b eine Seitenansicht und eine Ansicht von oben des ersten Spannteiles der Einspanneinrichtung für einen Einspannstift, mit dem der zu bearbeitende Riegel festgelegt wird,

Fig. 5a und 5b eine Seitenansicht und eine Ansicht von oben des zweiten Spannteiles der Einspanneinrichtung, und

Fig. 6 eine Ansicht einer erfindungsgemässen Vorrichtung von oben.

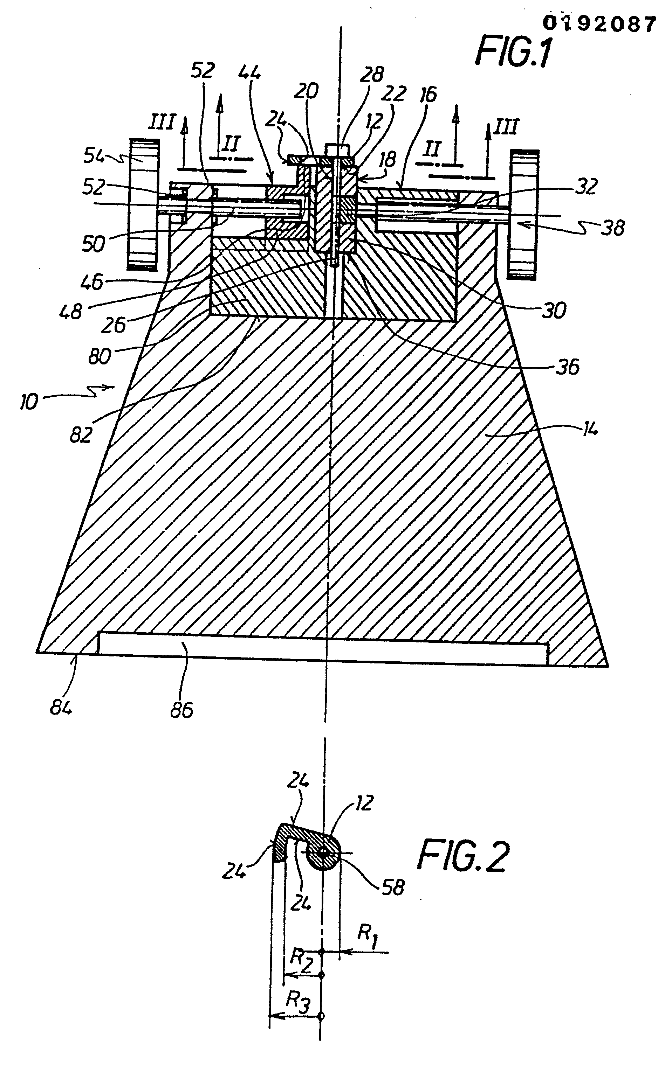

Fig. 1 zeigt einen Schnitt durch eine Vorrichtung 10 zur Herstellung eines Riegels 12, der mit einer Riegelachse in einem herausnehmbaren Zahnersatz verschwenkbar angeordnet wird. Die Vorrichtung 10 weist einen Lagersockel 14 auf, der an seiner Deckfläche 16 eine Einspanneinrichtung 18 mit einer Bohrung 20 aufweist. Die Einspanneinrichtung 18 ist mit einer Auflagefläche 22 zum Auflegen des Riegels 12 ausgebildet. Die Auflagefläche 22 steht über die Deckfläche 16 des Lagersockels 14 über, so dass die umlaufende Mantelfläche 24 des Riegels 12 mit einem über der Vorrichtung 10 hängend angeordneten Fräswerkzeug unbehindert bearbeitet werden kann. In die in der Einspanneinrichtung 18 vorgesehenen Bohrung 20 ist ein Einspannstift 26 eingesteckt, der einen Kopf 28 aufweist, mit dem der Einspannstift 26 auf dem Rohling des an seiner Mantelfläche 24 zu bearbeitenden Riegels 12 anliegt.

Zur Bearbeitung der Mantelfläche 24 des Riegels 12 wird der Riegel um den Einspannstift 26 verschwenkt, wobei das nicht dargestellte, über der Vorrichtung 10 hängend angeordnete Fräswerkzeug vom Einspannstift 26 einen konstanten, dem gewünschten Radius der Mantelfläche 24 des Riegels 12 entsprechenden Abstand aufweist.

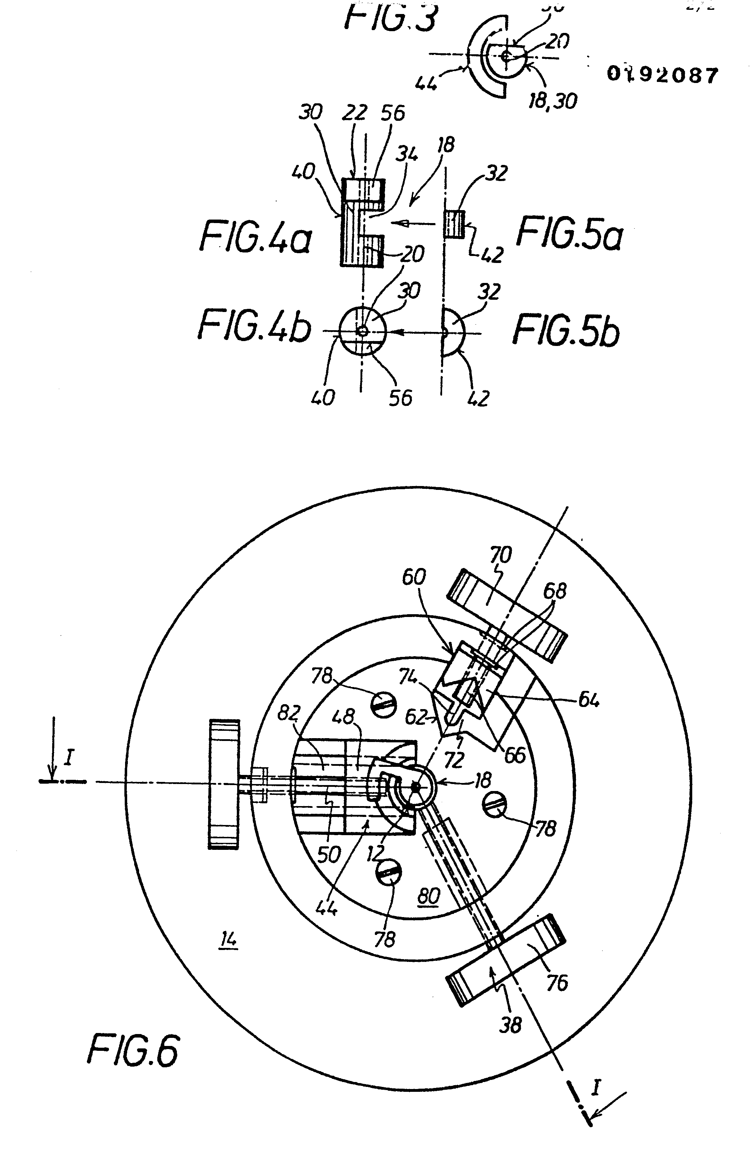

Wie auch die Figuren 4a, 4b, 5a und 5b zeigen, besteht die Einspanneinrichtung 18 aus zwei Spannteilen 30 und 32,

die zur besseren Verdeutlichung voneinander getrennt dargestellt sind. Durch die Pfeile wird angedeutet, dass das zweite Spannteil 32 in eine Ausnehmung 34 im ersten Spannteil 30 eingefügt ist. Die beiden Spannteile 30 und 32 der Einspanneinrichtung 18 sind in einer Ausnehmung 36 des Lagersockels 14 auswechselbar eingesteckt. Das erste Spannteil 30 weist ausser der Ausnehmung 34 zur Aufnahme des zweiten Spannteiles 32 auch die Bohrung 20 zur Aufnahme des Einspannstiftes 26 auf, wobei die Ausnehmung 34 die Bohrung 20 durchdringt.

Das zweite Spannteil 32 der Einspanneinrichtung 18 ist mittels einer Feststelleinrichtung 38 gegen das erste Einspannteil 30 und gleichzeitig gegen den Einspannstift 26 verstellbar. Mit der eine Schraubspindel und eine Rändelschraube aufweisenden Feststelleinrichtung 38 wird der Einspannstift 26 in der Vorrichtung 10 derart arretiert, dass der auf der Auflagefläche 22 aufliegende Riegel 12 um den Einspannstift 26 verschwenkt werden kann. Das zweite Spannteil 32 weist eine an die Mantelfläche 40 des Zylinders des ersten Spannteils 30 angepasste Rückenfläche 42 auf. Die Feststelleinrichtung 38 liegt an der Rückenfläche 42 des zweiten Spannteils 32 an.

Der Lagersockel 14 der erfindungsgemässen Vorrichtung 10 weist an seiner Deckfläche 16 neben der Einspanneinrichtung 18 eine mit einer Auflagerfläche 46 versehene Auflagereinrichtung 44 auf. Diese Auflagerfläche 46 und die Auflagefläche 22 der Einspanneinrichtung 18 spannen eine gemeinsame Ebene auf, auf der der Riegel 12 während seiner Verschwenkung um den Einspannstift 26 aufliegt. Die Auflagereinrichtung 44 weist einen Lagerbock 48 auf, der mit der Auflagerfläche 46 versehen ist. Der Lagerbock 48 ist entlang
einer Schraubspindel 50 in Bezug zur Bohrung 20 und
damit in Bezug zum Einspannstift 26 in radialer Richtung verstellbar. Die Schraubspindel 50 ist im Lagersockel 14 drehbar und mittels Federringen 52 gegen
axiale Verschiebungen gesichert gelagert. Sie ist mit
einer Rändelscheibe 54 versehen, mit welcher der Lagerbock 48 radial verstellt werden kann.

Die Auflagerfläche der Auflagereinrichtung 44 ist als
Kreisringsegment ausgebildet. Aus Figur 3 ist die Bohrung 20 in der Einspanneinrichtung 18, sowie eine Aussparung 56 im ersten Spannteil 30 deutlich ersichtlich.
Die von der Auflagefläche 22 der Einspanneinrichtung 18
ausgehende Aussparung 56 dient einem ungestörten Zugang
eines über der erfindungsgemässen Vorrichtung 10 hängend
angeordneten Fräswerkzeuges, mit dem der Riegel 12 entlang seiner Mantellinie 24 bearbeitet wird. Ein Riegel
mit einer umlaufenden Mantelfläche 24, die drei zu einer
Bohrung 58 konzentrische Radien R1, R2 und $R_3$ aufweist,
ist aus Fig. 2 ersichtlich.

Die Figur 6 zeigt, dass die erfindungsgemässe Vorrichtung ausser der Einspanneinrichtung 18 für den Einspannstift 26 und der Auflagereinrichtung 44 zum Auflagern des zu bearbeitenden Riegels 12 an seiner Deckfläche 16 auch eine Einspannvorrichtung 60 zum Festspannen des mit der Bohrung 58 zu versehenden Riegels
12 aufweist. Diese Einspanneinrichtung 60 weist einen
starren Backen 62, der in der Deckfläche 16 des Lagersockels 14 vorgesehen ist, und einen gegen den starren
Backen 62 verstellbaren Backen 64 auf. Der verstellbare
Backen 64 ist mit einer Gewindespindel 66 verbunden,
die sich durch den Lagersockel 14 hindurcherstreckt und
die mit Federringen 68 gegen axiale Verschiebungen gesichert ist. Die Gewindespindel 66 weist eine Rändelscheibe 70 auf, mit welcher der verstellbare Backen 64 der Einspanneinrichtung 60 gegen den starren Backen 62 verstellt werden kann. Der starre Backen 62 weist eine Auflagerfläche 72 für den mit einer Bohrung 58 zu versehenden Riegel 12 auf. Die Auflagerfläche 72 ist mit einer Ausnehmung 74 versehen, um einen Riegel 12 unbehindert mit der Bohrung 58 ausbilden zu können.

Die Figur 6 zeigt, dass das Feststellteil 76 der Einspanneinrichtung 18 für den Einspannstift 26, die Schraubspindel 50 der Auflagereinrichtung 44, sowie die Verstelleinrichtung 70 der Einspanneinrichtung 60 für den mit einer Bohrung 58 zu versehenden Riegel 12 am Umfang des Lagersockels 14, der rotationssymmetrisch ausgebildet ist, in der Nähe seiner Deckfläche 16 gleichmässig verteilt angeordnet sind. In dieser Figur sind ausserdem Befestigungselement 78 angedeutet, mit deren Hilfe ein die Einspanneinrichtung 18, die Auflagereinrichtung 44 und die Einspanneinrichtung 60 aufweisender Einsatz 80 in einer Ausnehmung 82 des Lagersockels 14 der erfindungsgemässen Vorrichtung 10 befestigt ist. Mit der Bezugsziffer 82 ist eine Führung für den Lagerbock 48 gekennzeichnet, der als Schwalbenschwanzführung ausgebildet sein kann.

Der Lagerbock 14 besteht zur Erzielung eines ausreichend hohen Gewichtes aus vollem Material, vorzugsweise aus magnetisierbarem Stahl. Seine Grundfläche 84 ist mit einer Ausnehmung 86 versehen, damit sich auf jeder Unterlage eine sichere, stabile und rutschfeste Auflage ergibt.

D e g u s s a  Aktiengesellschaft
Weissfrauenstraße 9, 6000 Frankfurt (Main)

Patentansprüche

1. Vorrichtung (10) zur Herstellung eines Riegels (12), der eine Bohrung (58) aufweist, durch die sich eine Riegelachse hindurcherstreckt, mit welcher der Riegel (12) in einem Zahnersatz verschwenkbar angeordnet ist, und dessen umlaufende Mantelfläche (24) mindestens einen zur Bohrung (58) konzentrischen Radius ($R_i$) aufweist,

g e k e n n z e i c h n e t  d u r c h
einen Lagersockel (14), der an seiner Deckfläche (16) eine Einspanneinrichtung (18) mit einer Bohrung (20) für einen der Riegelachse im Durchmesser entsprechenden Einspannstift (26) aufweist, wobei die Einspanneinrichtung (18) mit einer über die Deckfläche (16) des Lagersockels (14) überstehenden Auflagefläche (22) zum Auflegen des Riegels (12) versehen ist, der die Bohrung (58) aufweist, durch die sich der Einspannstift (26) hindurcherstreckt.

2. Vorrichtung nach Anspruch 1, dadurch gekennzeichnet, dass die Einspanneinrichtung (18) aus zwei Spannteilen (30, 32) besteht und in einer Ausnehmung (36) des Lagersockels (14) auswechselbar einsteckbar ist, wobei das erste Spannteil (28) die Bohrung (20) zum Einstecken des Einspannstiftes (26) aufweist und das zweite Spannteil (32) mittels einer Feststelleinrichtung (38) gegen das erste Spannteil (30) und gleichzeitig gegen den Einspannstift (26) verstellbar ist.

3. Vorrichtung nach Anspruch 2, dadurch gekennzeichnet, dass das erste Spannteil (30) ein Zylinder mit einer zur Bohrung (20) senkrechten Querausnehmung (34) ist, die mindestens bis zur Bohrung (20) reicht, und dass das zweite Spannteil (32) in der Ausnehmung (34) angeordnet ist und eine an die Mantelfläche (40) des Zylinders des ersten Spannteils (30) angepasste Rückenfläche (42) aufweist, an der die Feststelleinrichtung (38) anliegt.

4. Vorrichtung nach einem der Ansprüche 1 bis 3, dadurch gekennzeichnet, dass das erste Spannteil (30) der Einspanneinrichtung (18) von seiner Auflagefläche (22) ausgehend eine Aussparung (56) aufweist.

5. Vorrichtung nach Anspruch 1, dadurch gekennzeichnet, dass der Lagersockel (14) an seiner Deckfläche (16) eine Auflagereinrichtung (44) aufweist, die eine Auflagerfläche (46) besitzt, die mit der Auflagefläche (22) der Einspanneinrichtung (18) eine gemeinsame Ebene bildet.

6. Vorrichtung nach Anspruch 5, dadurch gekennzeichnet, dass die Auflagereinrichtung (44) einen mit der Auflagerfläche (46) versehenen Lagerbock (48) aufweist, der in Bezug zur Einspanneinrichtung (18) in radialer Richtung verstellbar ist.

0192087

7. Vorrichtung nach Anspruch 6, dadurch gekennzeichnet, dass der Lagerbock (48) entlang einer Schraubspindel (50) verstellbar ist.

8. Vorrichtung nach einem der Ansprüche 5 bis 7, dadurch gekennzeicnnet, dass die Auflagerfläche (48) der Auflagereinrichtung (44) als Kreisringsegment ausgebildet ist.

9. Vorrichtung insbesondere nach einem der vorhergehenden Ansprüche, dadurch gekennzeichnet, dass der Lagersockel (14) an seiner Deckfläche (16) eine Einspanneinrichtung (60) zum Festspannen des mit der Bohrung (58) zu versehenden Riegels (12) aufweist.

10. Vorrichtung nach Anspruch 9, dadurch gekennzeichnet, dass die Einspanneinrichtung (60) einen starren Backen (62) und einen mittels einer Verstelleinrichtung (70) verstellbaren Backen (64) aufweist.

11. Vorrichtung nach Anspruch 10, dadurch gekennzeichnet, dass der starre Backen (62) und der verstellbare Backen (64) mit abgewinkelten Backenflächen versehen sind.

12. Vorrichtung nach einem der vorhergehenden Ansprüche, dadurch gekennzeichnet, dass die Einspanneinrichtung (18) für den Einspannstift (26), die Auflagereinrichtung (44) und die Einspanneinrichtung (60) für den Riegel (12) am Lagersockel (14) gleichmässig verteilt angeordnet sind.

13. Vorrichtung nach einem der Ansprüche 1 bis 12, dadurch gekennzeichnet, dass der Lagersockel (14) eine Grundfläche (84) aufweist, die grösser ist als seine Deckfläche (16).

14. Vorrichtung nach einem der Ansprüche 1 bis 13, dadurch gekennzeichnet, dass der Lagersockel (14) aus einem magnetisierbaren Material besteht.

FIG.1

FIG.2

FIG.3

0192087

FIG.4a   FIG.5a

FIG.4b   FIG.5b

FIG.6